Europäisches Patentamt

European Patent Office

Office européen des brevets

(11) Veröffentlichungsnummer: **0 432 523 A1**

# EUROPÄISCHE PATENTANMELDUNG

(21) Anmeldenummer: **90122132.5**

(22) Anmeldetag: **20.11.90**

(51) Int. Cl.5 **A61C 3/06**

(30) Priorität: **15.12.89 DE 3941414**

(43) Veröffentlichungstag der Anmeldung:
**19.06.91 Patentblatt 91/25**

(84) Benannte Vertragsstaaten:
**AT BE CH DE DK ES FR GB GR IT LI LU NL SE**

(71) Anmelder: **RENFERT GMBH & CO. KG**
**Industriegebiet**
**W-7709 Hilzingen(DE)**

(72) Erfinder: **Rieger, Klaus-Ulfert**
**Kornblumenweg 39**
**W-7709 Hilzingen(DE)**
Erfinder: **Schneider, Ingrid**
**Duchtlinger Strasse 2a**
**W-7700 Singen(DE)**

(74) Vertreter: **Hiebsch, Gerhard F., Dipl.-Ing. et al**
**Hiebsch & Peege Patentanwälte Postfach**
**464 Erzbergerstrasse 5a**
**W-7700 Singen 1(DE)**

(54) **Poliervorrichtung für die Dentaltechnik sowie Verfahren zu deren Herstellung.**

(57) Eine Poliervorrichtung für die Dentaltechnik in Form einer dünnen Trägerscheibe aus verschlungenen Fasern, Haar- oder Wollsträngen, insbesondere aus Filz, ist mit Hartstoffen wie Diamantkörnern sowie einem Bindemittel versehen, wobei dieses ein Polyethylenoxid bzw. ein hydroxylgruppenhaltiger Polyether hohen Molukulargewichtes und eines Erstarrungspunktes von etwa 60° C ist. Als Bindemittel soll insbesondere ein Polyalkylenglykol eingesetzt werden.

EP 0 432 523 A1

## POLIERVORRICHTUNG FÜR DIE DENTALTECHNIK SOWIE VERFAHREN ZU DEREN HERSTELLUNG

Die Erfindung betrifft eine Poliervorrichtung für die Dentaltechnik in Form einer Trägerscheibe mit Hartstoffen und Bindemitteln. Zudem erfaßt die Erfindung ein Verfahren zum Herstellen einer Poliervorrichtung.

Zum Beschleifen von Zahnersatzteilen -- aber auch von Zähnen im Munde eines Patienten -- werden in der Praxis Polierpasten eingesetzt; in diese mit Diamantkörnern versetzte Paste wird umittelbar vor dem eigentlichen Poliervorgang eine Trägerscheibe eingebracht, bis sich an deren Oberfläche genügend Polierpaste angesetzt hat. Der Polierpastenträger wird dann rotierend über die zu beschleifende Oberfläche geführt. Die Vorbereitungen für den Schleifvorgang sind aufwendig, das Schleifen selbst mühsam mit dem zusätzlichen Nachteil eines zentrifugalen Austrages von Polierpastenteilen, die dann den Benutzer treffen und zu Verschmutzungen führen.

Bekannt ist es auch, chemische Trägersubstanzen in Mehrkomponentenzusammensetzung vor dem Schleifvorgang zu erwärmen und in die Trägerscheibe einzutreiben. Auch in diesem Falle ist die Handhabung kompliziert.

Von besonderem Nachteil ist bei den üblichen Handhabungen auch, daß Trägerscheibe und/oder Paste mehrfach eingesetzt werden, was einen Kontakt des später bei anderen Schleifvorgängen ebenfalls zu verwendenden Bindemittels mit Ausscheidungen eines Patienten ermöglicht.

Angesichts dieser Gegebenheiten hat sich der Erfinder die Aufgabe gestellt, für einen dentalen Schleifvorgang eine Poliervorrichtung der eingangs erwähnten Art zur Verfügung zu stellen, die vom Benutzer ohne zusätzlichen Aufwand unmittelbar eingesetzt werden kann, die darüberhinaus kostengünstig hergestellt und dadurch zum Wegwerfartikel wird; dies erlaubt es, äußerst hygienisch zu arbeiten und damit auch vor Übertragungen von Krankheiten wie Aids zu schützen.

Die Lösung der Aufgabe wird darin gesehen, daß die Poliervorrichtung eine kompakte Einheit aus der Trägerscheibe aus verschlungenen Fasern, Haar- oder Wollsträngen, inbesondere aus Filz, mit eingesetzten Hartstoffen wie Diamantkörnern und einem Bindemittel ist, wobei dieses Bindemittel ein Polyethylenoxid bzw. ein hydroxylgruppenhaltiger Polyether hohen Molekulargewichtes und eines Erstarrungspunktes von etwa 60° C ist; von besonderer Vorteilhaftigkeit ist dabei der Einsatz eines Polyalkylenglykols als Bindemittel.

Diese Poliervorrichtung wird dem Benutzer abgepackt zur Verfügung gestellt und nach einmaligem Gebrauch beseitigt. Eines Eintauchens der Trägerscheibe in Polierpaste unmittelbar vor oder während dem Schleifvorgang bedarf es so nicht mehr.

Bekanntlich steigt die Härte von Polyglykolen und deren Viskosität mit zunehmendem Molekulargewicht. Für die Herstellung der erfindungsgemäßen Poliervorrichtung wird ein Bindemittel aus Polyethylenoxid bzw. hydroxylgruppenhaltigem Polyether mit einem Erstarrungspunkt von etwa 60° C eingesetzt, das man erfindungsgemäß thermisch verflüssigt in die dünne Trägerscheibe durch einen Tränkvorgang einbringt und dann bis zum Erstarren des Polyethers abkühlen läßt. Hierdurch entsteht ein Fertigprodukt, das beliebig lange aufbewahrt und einzeln eingesetzt zu werden vermag.

Erfindungsgemäß werden die Hartstoffe, beispielsweise Diamantkörner, dem Polyether bzw. dem bevorzugten Polyalkylenglykol hohen Molekulargewichtes vor der dem Tränkvorgang vorausgehenden thermischen Verflüssigung zugemischt.

Es ist auch denkbar, wenn auch beschwerlicher, die Hartstoffe während des Tränkvorganges zuzugeben.

In jeden Falle ensteht ein Wegwerfartikel einfacher Herstellung, der die vom Erfinder gesehene Aufgabe in bestechend einfacher Weise löst.

### Ansprüche

1. Poliervorrichtung für die Dentaltechnik in Form einer dünnen Trägerscheibe aus verschlungenen Fasern, Haar- oder Wollsträngen, inbesondere aus Filz, die mit Hartstoffen wie Daimantkörnern sowie einem Bindemittel versehen ist, wobei dieses ein Polyethylenoxid bzw. ein hydroxylgruppenhaltiger Polyether hohen Molekulargewichtes und eines Erstarrungspunktes von etwa 60° C ist.

2. Poliervorrichtung nach Anspruch 1, gekennzeichnet durch ein Polyalkylenglykol als Bindemittel.

3. Verfahren zum Herstellen einer Poliervorrichtung, insbesondere nach Anspruch 1 oder 2, mit einer Trägerscheibe aus Filzwerkstoff od.dgl., in der Hartstoffe als Polierkörner durch ein Bindemittel festgelegt werden, wobei als Bindemittel ein Polyethylenoxid bzw. ein hydroxylgruppenhaltiger Polyether mit einem Erstarrungspunkt von etwa 60° C, insbesondere ein Polyglykol, thermisch verflüssigt und die Trägerscheibe mit der Flüssigkeit durchtränkt wird, wonach die getränkte Trägerscheibe zumindest bis zum Erstarren des Bindemittels abgekühlt wird.

4. Verfahren nach Anspruch 3, gekennzeichnet durch ein Polyalkylenglykol hohen Molekulargewichts als Bindemittel.

5. Verfahren nach Anspruch 3 oder 4, dadurch gekennzeichnet, daß die Hartstoffe dem Polyether vor der dem Tränkvorgang vorausgehenden thermischen Verflüssigung zugemischt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 801 781   (D.F.S.)<br>* Ansprüche 1-3 *<br><br>— — — | 1 | A 61<br>C 3/06 |
| A | DE-A-1 729 696   (JARBY)<br>* Ansprüche 1,2 *<br><br>— — — | 1 | |
| A | DE-U-8 708 062   (GEBR. BRASSELER)<br>* Anspruch 1 *<br><br>— — — — — | 1 | |
|  |  |  | **RECHERCHIERTE SACHGEBIETE (Int. Cl.5)**<br><br>A 61 C<br>A 61 K |

Der vorliegende Recherchenbericht wurde für alle Patentansprüche erstellt

| Recherchenort | Abschlußdatum der Recherche | Prüfer |
|---|---|---|
| Den Haag | 19 März 91 | KOUSOURETAS I. |